# EUROPEAN PATENT SPECIFICATION

(11) **EP 1 833 345 B1**
(45) Date of publication and mention of the grant of the patent: **28.05.2008**
(21) Application number: 06710621.1
(22) Date of filing: 04.01.2006
(51) Int. Cl.: A47L 9/28

(54) **A VACUUM CLEANER**
VAKUUMREINIGER
ASPIRATEUR

(30) Priority: 04.01.2005 TR 200500120
(43) Date of publication of application: 19.09.2007
(73) Proprietor: Arçelik Anonim Sirketi, 34950 Istanbul (TR)
(72) Inventor: HAZIR, Sefa, Arcelik Anonim Sirketi, 34950 Istanbul (TR); OZARSLAN, Arif, Arcelik Anonim Sirketi, 34950 Istanbul (TR)
(86) International application number: PCT/IB2006/050022
(87) International publication number: WO 2006/072908

(56) References cited:
- EP-A- 1 032 116
- DE-A1- 4 430 018
- DE-A1- 19 853 430
- PATENT ABSTRACTS OF JAPAN vol. 2000, no. 21, 3 August 2001 (2001-08-03) -& JP 2001 092541 A (TOSHIBA TEC CORP), 6 April 2001 (2001-04-06)
- PATENT ABSTRACTS OF JAPAN vol. 1998, no. 10, 31 August 1998 (1998-08-31) -& JP 10 137164 A (MATSUSHITA ELECTRIC IND CO LTD), 26 May 1998 (1998-05-26)
- PATENT ABSTRACTS OF JAPAN vol. 1999, no. 03, 31 March 1999 (1999-03-31) -& JP 10 328101 A (MATSUSHITA ELECTRIC IND CO LTD), 15 December 1998 (1998-12-15)
- PATENT ABSTRACTS OF JAPAN vol. 1995, no. 02, 31 March 1995 (1995-03-31) -& JP 06 311953 A (MATSUSHITA ELECTRIC IND CO LTD), 8 November 1994 (1994-11-08)
- DATABASE WPI Section PQ, Week 200324 Derwent Publications Ltd., London, GB; Class P28, AN 2003-245615 XP002386175 & KR 2002 007 845 A (SAMSUNG KWANGJU ELECTRONICS CO LTD) 29 January 2002 (2002-01-29)

## Description

The present invention relates to a vacuum cleaner in which the harmonic problems resulting from actuating the motor in different power levels are eliminated.

In the state of the art, the dust and dirt are collected by sucking via a motor in the vacuum cleaners. In cases where motors with high suction power, for example 1400 Watt, having a more powerful work performance are utilized, the current is produced in waves, along with the main frequency, with odd number harmonics during the adjustment of the suction power of the motor by the user and these harmonics can be above the international EMC limits according to the characteristics of the motor.

A vacuum cleaner according to the preambles of claims 1 and 2 is for example disclosed in JP 2001092541.

The object of the present invention is to design a vacuum cleaner comprising a motor, the harmonic problems of which are eliminated in a simple and economic manner without loss of suction power.

The vacuum cleaner designed to fulfill the object of the present invention is illustrated in the attached figures, where:

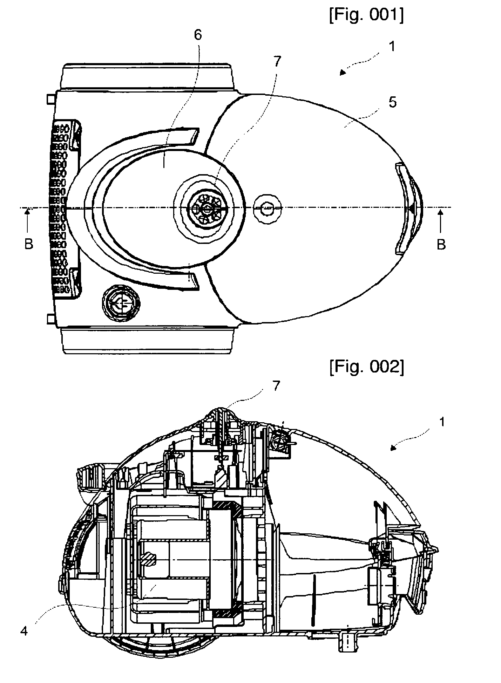

Figure 1 - is the top view of a vacuum cleaner.

Figure 2 - is the BB sectional view of a vacuum cleaner.

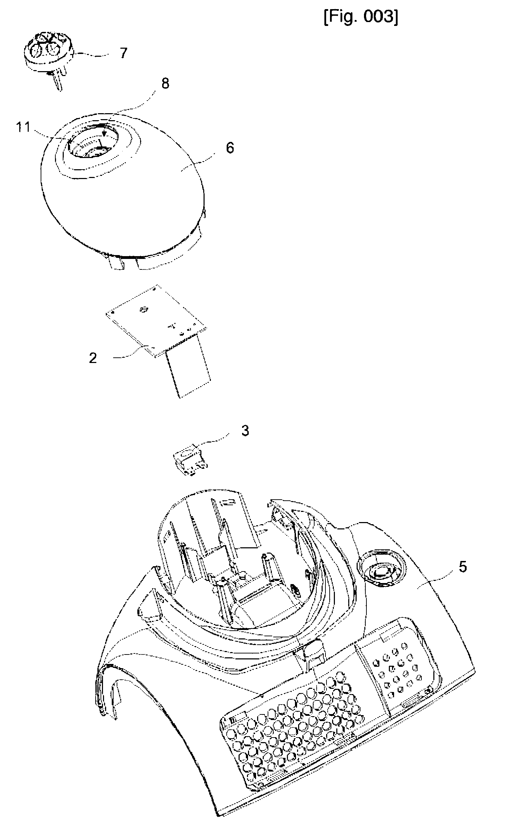

Figure 3 - is the exploded perspective view of a body, a potentiometer, an electronic card, a panel and a button.

Figure 4 - is the perspective view of a body and a panel cut in the BB direction.

Figure 5 - is the lower perspective view of a button on a panel.

Figure 6 - is the schematic view of a rotating potentiometer.

Figure 7 - is the view of an electronic circuit diagram.

Figure 8 - is the resistance- position angle graph.

Figure 9 - is the graph showing the time and the voltage feeding the motor when the resistance value of a potentiometer is R1.

Figure 10 - is the graph showing the time and the voltage feeding the motor when the resistance value of a potentiometer is R2.

Figure 11 - is the graph showing the time and the voltage feeding the motor when the resistance value of a potentiometer is R3.

Figure 12 - is the graph showing the time and the voltage feeding the motor when the resistance value of a potentiometer is R4.

Elements shown in the figures are numbered as follows:
1. Vacuum cleaner
2. Electronic power adjustment card
3. Potentiometer
4. Motor
5. Body
6. Panel
7. Button
8. Button socket
9. Retainer
10. Notch
11. Limit projection
12. Triggering shaft
13. Attachment notch
14. Step latch
15. Wheel

The vacuum cleaner (1) comprises a body (5), a panel (6) situated on the body (5), a button (7) situated on the panel (6) providing the user to select choices like opening/ closing, adjusting the suction power etc., a motor (4) providing suction of dust and dirt to be cleaned, and an electronic power adjustment card (2) allowing control of the motor (4).

The electronic power adjustment card (2) comprises a potentiometer (3) that can be controlled by a button (7), which can skip past the preset resistance intervals for not feeding the motor (4) power levels where unwanted harmonics are created while adjusting the motor (4) suction power levels, for preventing unwanted harmonics to be generated along with the main voltage frequencies or keeping such under certain values, for example keeping these harmonics under the international EMC limits.

The panel (6) comprises a button socket (8) on its top portion where the button (7) is situated inside, more than one notch (10) on the sides of the button socket (8) for allowing the user to feel the phases of the potentiometer (3) and a limit projection (11) on the lower side of the button socket (8) which prevents exceeding the operational limits of the potentiometer (3).

The button (7) comprises a triggering shaft (12) which rotates together with its body around its axis providing the potentiometer (3) to control the power level, one or more attachment latches (13) which provide fixing of the button (7) by attaching to the lower edge of the button socket (8) with the latches on its end portion, a step latch (14) on the upper portion where the attachment latch (13) is situated, which skips over the notches (10) on the attachment latch (13), entering in the spaces between the notches (10), making a noise and giving the impression of skipping the steps to the user while the triggering shaft (12) is rotated around its axis, and a retainer (9) which moves within the button socket (8), limiting the movements of the button (7) by touching the lateral surfaces of the limit projection (11).

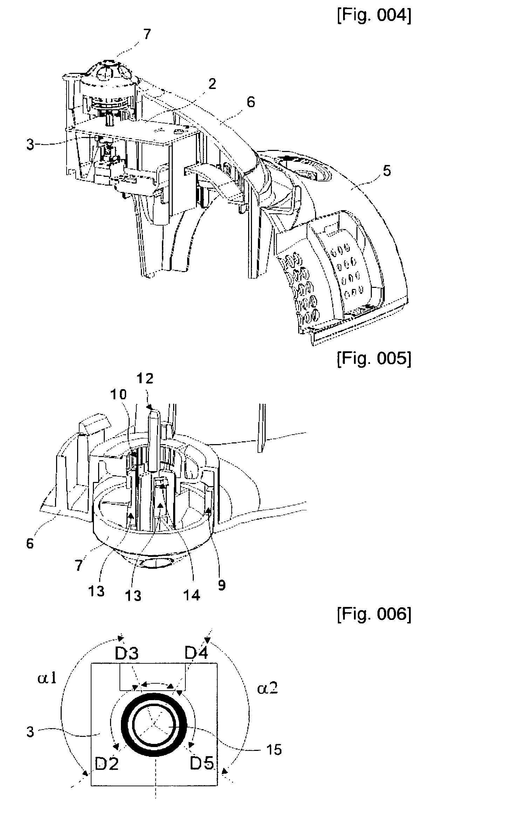

The potentiometer (3) comprises a wheel (15), which is rotated by the button (7) allowing the adjustment of the resistance value that the potentiometer (3) will apply. The resistance interval of the potentiometer (3) is divided according to the 360 degree arc that the wheel (15) can make during one rotation. The places in between the two points (D3, D4) which lies between the first point (D2) that the potentiometer (3) starts to use with the resistance of the minimum value and the point (D5) corresponding to the maximum resistance value, are skipped with the help of the notches (10) in a way that the user cannot utilize (Figure 6).

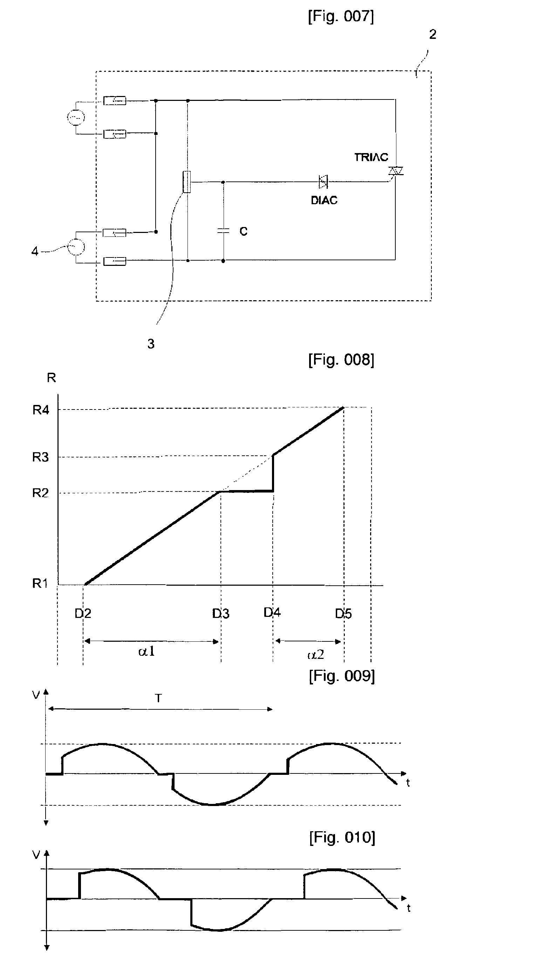

The potentiometer (3) functions by skipping the resistance regions corresponding to the motor (4) power regions where unwanted harmonics are generated that are determined by the producer according to the operational characteristics of the motor (4). While the motor (4) is being actuated, it increases from one value to the other in a linear or logarithmic fashion, and this region is passed by skipping entirely. The potentiometer (3) functions within the operational interval (D2-D3 and D4-D5), which the user is allowed to utilize by the help of the notches (10) and the resistance interval (R1-R2 and R3-R4) in which the motor (4) can function without confronting unwanted harmonics (Figure 6, Figure 8).

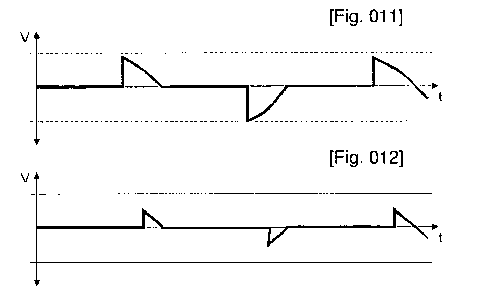

When the potentiometer (3) starts functioning and the resistance value is brought to the first resistance value (R1) which the potentiometer allows to be used, the voltage feeding the motor (4) starts to be applied with interruptions by the help of the electronic components like capacitor, TRIAC, DIAC (Figure 7) situated on the electronic card (2). While the potentiometer (3) is functioning within the operational interval (D2-D3 and D4-D5) which the user is allowed to utilize by the help of the notches (10), and within the resistance interval (R1-R2 and R3-R4) in which the motor (4) can function without confronting the unwanted harmonics, the electronic card (2) allows the feeding of the motor (4) with the required voltage values (Figure 9, Figure 10, Figure 11, Figure 12). Consequently the potentiometer (3) provides the skipping of the resistance interval (R2-R3) where the motor (4) may be confronted with the unwanted harmonics in the operational interval (D3-D4), which the user is not allowed to utilize with the help of the notches (10) (Figure 8).

In one embodiment of the present invention, a rotating potentiometer (3) is utilized with the arc being (245° +/- 5°) between the first point (D2) which it starts to use with a resistance of the least value and the point (D5) corresponding to the maximum resistance value, where the motor (4) can function within the resistance intervals being (R1-R2 and R3-R4) (0 to 130 +/- 5 kΩ) and (210 +/- 5 kΩ to 250 +/- 5 kΩ) in these regions, without encountering unwanted harmonics, having an operational interval of (D3-D4) (130 +/- 5 kΩ to 210 +/- 5 kΩ) which the user is not allowed to utilize.

In another embodiment of the present invention, when the user moves the button (7) by the help of the attachment latch (13) and the step latch (14), a panel (6) is utilized which provides stopping only at the notches (10) desired by the producer by the step latch (14), and a panel (6) is utilized, for the potentiometer (3) to skip the resistance values which the user cannot notice and change, having more than one notch (10) with a distance between the two adjacent ones chosen as long as the distance (D3-D4) required for the potentiometer (3) to skip the unwanted resistance, preventing the potentiometer (3) to function between the resistance values (R2 and R3) that might lead to harmonics problems. The number of the notches (10) is determined by the distance between the notches (10) and when the user moves the button (7), the step latch (14) stops only at the notches (10) that the producer wants and the potentiometer (3) is enabled to skip the unwanted resistance values in such a way that the user cannot notice and change.

The motor (4) is allowed to function only at the main harmonic frequencies without allowing the generation of unwanted harmonics, by not entering and passing the motor (4) power regions corresponding to the resistance interval skipped by the potentiometer (3) of the present invention. With the embodiment of the present invention, the unwanted harmonics are skipped before being generated without adding an auxiliary element to the electronic power adjustment card (2) in a simple and inexpensive manner without preventing the suction power adjustment of the vacuum cleaner (1).

## Claims

1. A vacuum cleaner (1) comprising a motor (4) providing suction of dust and dirt to be cleaned, an electronic power adjustment card (2) allowing control of the motor (4) and a button (7) providing the user to determine choices like opening/ closing, adjusting the suction power etc., by moving and **characterized by** an electronic power adjustment card (2) having a potentiometer (3) that is controlled by a button (7), which can skip past the preset resistance intervals for not feeding the motor (4) power levels where unwanted harmonics are created during adjusting the motor (4) suction power levels, for preventing unwanted harmonics to be generated along with the main voltage frequencies and keeping them under certain values.

2. A vacuum cleaner (1) comprising a panel (6), a button (7) situated on the panel (6) providing the user to determine choices like opening/closing, adjusting the suction power etc., **characterized by** a panel (6) for allowing the potentiometer (3) to skip the unwanted resistance values in such a way that the user cannot notice and change, having more than one notch (10), with a distance between the two adjacent ones chosen as the distance (D3-D4) required for the potentiometer (3) to skip the unwanted resistance, preventing the potentiometer (3) to function between the resistance values (R2 and R3) that might lead to harmonics problems, and by said button (7) having one or more attachment latches (13) for fixing the button (7) and a step latch (14) on the upper portion where the attachment latch (13) is situated, which enters the spaces on the attachment latch (13) when the user moves the button (7) by the help of it, making a noise and giving the impression of skipping the steps to the user, stopping only at the notches (10) desired by the producer with the step latch (14).

## Patentansprüche

1. Staubsauger (1), umfassend: einen Motor (4), der das Aufsaugen von zu entfernendem Staub und Schmutz vorsieht, eine elektronische Leistungseinstellkarte (2), die ein Steuern des Motors (4) erlaubt, und einen Knopf (7), der vorsieht, dass der Benutzer durch Bewegen des Knopfes eine Auswahl wie Öffnen/Schließen, Einstellen der Saugkraft usw. trifft, **dadurch gekennzeichnet, dass** die elektronische Leistungseinstellkarte (2) ein Potentiometer (3) aufweist, das durch den Knopf (7) gesteuert wird, der voreingestellte Widerstandsintervalle überspringen kann, damit der Motor (4) während des Einstellens der Saugleistung des Motors (4) nicht bei Leistungspegeln mit Strom versorgt wird, bei denen unerwünschte Oberschwingungen erzeugt werden, um zu verhindern, dass zusammen mit der Hauptspannungsfrequenz unerwünschte Oberschwingungen erzeugt werden, und um diese unterhalb von bestimmten Werten zu halten.

2. Staubsauger (1), umfassend: eine Platte (6), einen Knopf (7), der an der Platte (6) angeordnet ist, und der vorsieht, dass der Benutzer durch Bewegen des Knopfes eine Auswahl wie Öffnen/Schließen, Einstellen der Saugkraft usw. trifft, **dadurch gekennzeichnet, dass** die Platte (6) es einem Potentiometer (3) erlaubt, unerwünschte Widerstandswerte zu überspringen, derart, dass der Benutzer keine Veränderung wahrnehmen kann, und dass er mehr als eine Ausnehmung (10) aufweist, wobei ein Abstand zwischen zwei benachbarten Ausnehmungen als der Abstand (D3-D4) ausgewählt ist, der von dem Potentiometer (3) benötigt wird, um einen unerwünschten Widerstand zu überspringen, wodurch verhindert wird, dass das Potentiometer (3) zwischen Widerstandswerten (R2 und R3) arbeitet, die zu Problemen mit Oberschwingungen führen können, und **dadurch**, dass der Knopf (7) einen oder mehrere Riegel (13) zum Fixieren des Knopfes (7) aufweist, und am oberen Abschnitt, an dem der Fixierungsriegel (13) angeordnet ist, einen Stufenriegel (14) aufweist, der in Öffnungen am Fixierungsriegel (13) eintritt, wenn der Benutzer mit dessen Hilfe den Knopf (7) bewegt, wodurch ein Geräusch verursacht wird, das für den Benutzer den Eindruck eines Überspringens der Schritte erzeugt, wobei der Knopf aufgrund des Stufenriegels (14) erst an der vom Hersteller vorgesehenen Aussparung (10) anhält.

## Revendications

1. Nettoyeur à vacuum (1) comprenant un moteur (4) assurant l'aspiration des poussières et saletés à nettoyer, une carte électronique d'ajustement de puissance (2) permettant le contrôle du moteur (4) et un bouton (7) donnant à l'utilisateur la possibilité de déterminer des choix tels que l'ouverture et la fermeture, l'ajustement de l'aspiration, etc., en le faisant bouger, **caractérisé par** une carte électronique d'ajustement de puissance (2) ayant un potentiomètre (3) contrôlé par un bouton (7) qui pourrait permettre de ne pas tenir compte des intervalles de résistance préétablies pour la non alimentation du moteur (4) à certains niveaux, où certaines harmonies non désirées sont créées durant l'ajustement du moteur (4) pour certains niveaux de puissance d'aspiration, pour empêcher la formation des harmonies non désirées avec les fréquences principales de voltage et pour garder ces dernières en deçà de certaines valeurs.

2. Nettoyeur à vacuum (1) comprenant un panel (6), un bouton (7) situé sur le panel (6) donnant à l'utilisateur la possibilité de déterminer des choix tels que l'ouverture/la fermeture, l'ajustement de la puissance d'aspiration, etc., **caractérisé par** un panel (6) pour permettre au potentiomètre (3) de sauter les valeurs de résistance non désirées de façon à ce que, celui-ci ayant plusieurs encoches (10), l'utilisateur n'aperçoive et ne change la distance entre deux adjacents choisis selon la distance (D3-D4) requise pour que le potentiomètre (3) puisse laisser tomber la résistance non désirée, tout en empêchant le potentiomètre (3) de démarrer entre les valeurs de résistance (R2 et R3) qui pourraient conduire à des problèmes d'harmonies, et ledit bouton (7) ayant un ou plusieurs loquets d'attachement (13) pour fixer le bouton (7) et un pied de loquet (14) sur la partie supérieure où le loquet d'attachement (13) est situé, qui crée des espaces sur le loquet d'attachement (13) lorsque l'utilisateur fait bouger le bouton (7) à l'aide de celui-ci, quand il fait du bruit et donne l'impression de faire laisser tomber les étapes à l'utilisateur, pour l'arrêter seulement aux encoches (10) désirées par le producteur à l'aide du pied de loquet (14).
